# EUROPEAN PATENT SPECIFICATION

(11) **EP 2 538 568 B1**
(45) Date of publication and mention of the grant of the patent: **29.01.2014**
(21) Application number: 11305780.6
(22) Date of filing: 21.06.2011
(51) Int. Cl.: H04B 3/46, H04M 3/22

(54) **A tool and method for analysing and diagnosing physical media in an access network**
Werkzeug und Verfahren zur Analyse und Diagnose physischer Medien in einem Zugriffsnetzwerk
Outil et procédé pour analyser et diagnostiquer un support physique dans un réseau d'accès

(43) Date of publication of application: 26.12.2012
(73) Proprietor: Alcatel Lucent, 75007 Paris (FR)
(72) Inventor: Wahibi, Issam, 1030 Schaerbeeck (BE); Drooghaag, Benoît, 1421 Ophain-Bois-Seigneur-Isaac (BE)
(74) Representative: ALU Antw Patent Attorneys

(56) References cited:
- US-A1- 2010 114 529
- US-B1- 6 870 901
- KERPEZ K J ET AL: "Integrated DSL Test, Analysis, and Operations", IEEE TRANSACTIONS ON INSTRUMENTATION AND MEASUREMENT, IEEE SERVICE CENTER, PISCATAWAY, NJ, US, vol. 57, no. 4, 1 April 2008 (2008-04-01), pages 770-780, XP011202934, ISSN: 0018-9456

## Description

### Field of the Invention

The present invention generally relates to analysing and diagnosing physical media in access networks, like for instance the twisted pair copper lines used for broadband Digital Subscriber Line (DSL) services. The invention in particular concerns diagnosis at binder level in order to improve detection of binder-specific problems.

### Background of the Invention

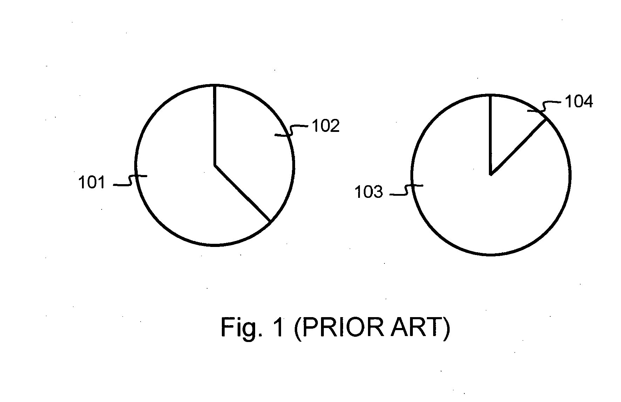

Existing access network analysing tools like for instance Alcatel-Lucent's 5530 Network Analyser help operators of access networks to prequalify DSL (Digital Subscriber Line) lines for broadband and/or narrowband access services, to detect and troubleshoot customer equipment and home network problems, and to manage the access network infrastructure. In order to detect faults or problems in the physical media interconnecting central office equipment and customer premises or central office equipment and remote units, existing network analysing tools typically feature line-level diagnosis functionality. The line-level diagnosis may be executed on all lines in a binder, e.g. a cable, and the percentage of failed lines in a binder may serve as indication for binder-level problems such as water ingress in a cable, crosstalk impacting all lines in a single binder, corrosion in the patch panel, etc. Fig. 1 for instance shows on the left side a binder with A % faulty lines 102 and (100-A) % lines without problem 101. On the right side, Fig. 1 shows a binder with B % faulty lines 104 and (100-B) % lines without problem 103. If the percentage of failed lines exceeds a certain threshold, e.g. 25 %, the binder may be considered to be affected by a binder-specific problem. In Fig. 1, this will be the case for the binder on the left side, whereas the binder on the right side will be considered normal (less than 25 % faulty lines).

Existing network analysing tools hence perform line-level analysis and at best provide the operator a fairly simple view on the percentage of lines that are impaired in a binder. As a consequence, existing network analysing tools are not adequate in detecting binder-level failures and definitely do not provide direct visibility on binder-level problems.

United States Patent US 6,870,901 B1 entitled "Design and Architecture of an Impairment Diagnosis System for Use in Communications Systems" describes a method and apparatus for detecting line impairments, e.g. on a DSL line. The technique described therein compiles statistical models of physical layers and relies on a priori distributions of crosstalk transfer functions to diagnose a line impairment. The technique is rather complex, typically requiring a multi-processor computational architecture, and it is not tuned to directly detect binder-specific problems.

United States Patent Application US 2010/0114529 A1 entitled "DSL Diagnosis Expert System and Method" describes an automated test procedure for DSL lines that relies on test vectors and a rule database and involves a technician. The test vectors are generated for a single DSL circuit. There is no possibility to directly test and detect binder level errors.

Also the article "Integrated DSL Test, Analysis, and Operations" from authors Kenneth J. Kerpez and Raymond Kinney, published in IEEE Transactions on Instrumentation and Measurement, Vol. 57, No. 4, April 2008, recognizes the need for testing DSL lines and proposes to integrate a large amount of test mechanisms at physical, network and higher layers in a single software platform in order to be able to isolate and troubleshoot failure of DSL operation. Again, the software does not analyse DSL lines at binder level and therefore is not able to directly detect binder level failures.

It is an objective of the present invention to overcome the above identified shortcomings of the prior art network analysing tools. More particularly, it is an objective of the present invention to disclose a tool for analysing and diagnosing physical media in access networks that is able to directly diagnose faults at binder-level, enabling operators to detect abnormal binders with specific binder faults.

### Summary of the Invention

According to the present invention, the above identified objectives are realized by a tool for analysing and diagnosing physical media in an access network as defined by claim 1, the tool comprising:
- means for determining a physical binder specific statistical distribution of one or more access line performance parameters;
- means for determining a network-wide statistical distribution of the one or more access line performance parameters;
- means for comparison of the physical binder specific statistical distribution with the network-wide statistical distribution; and
- means for detecting and reporting from the comparison binder-specific faults.

Thus, the present invention analyses certain line performance parameters and compares the local, binder-specific distribution with a network-wide reference distribution for these parameters. If a certain binder is impacted by a problem, e.g. corrosion, water ingress, crosstalk, etc., most of the lines contained within this binder will be affected in a way that depends on the nature of the problem, and the binder-specific distribution of certain parameter values will differ from the network-wide distribution of these parameters in a way that is indicative for the binder-specific problem and even indicative for the nature of the binder-specific problem, as will be explained below.

Optionally, as defined by claim 2, the access line performance parameters in the tool for analysing and diagnosing physical media in an access network according to the present invention, may comprise one or more of:
- a stationary noise level measured for an access line;
- a mean time between errors or MTBE measured for an access line; and
- a mean time between resynchronizations or MTBR measured for an access line.

Although this list is not exhaustive, the stationary noise level, the MTBE and the MTBR are parameters that can be measured accurately in for instance DSL networks. The global distribution of one or some of these parameters in all lines of a DSL (or more generally access) network can be considered as reference distribution. The distribution of one or some of these parameters in the lines contained in a single binder can be considered as a local distribution. Comparison of the local distribution with the reference distribution then enables to detect presence/absence of binder specific problems and to identify the nature of such binder-specific problems.

Further optionally, as defined by claim 3, the means for comparison in the tool for analysing and diagnosing physical media in an access network according to the current invention, may be adapted to perform a parametric comparison wherein a mean value and variance value of the physical binder specific statistical distribution are compared with a mean value and variance value of the network-wide statistical distribution.

Indeed, the well known Student's T test or other variants of this parametric test family can be used to compare for instance the mean and variance values of the local, binder-specific distribution with the mean and variance values of the reference, network-wide distribution. Such parametric comparison of statistical distributions is computationally simple but assumes that the distributions follow a normal law or that the number of samples is sufficiently large to approximate it. This may not be the case when the number of lines in the binder under consideration is not high enough.

Alternatively, as defined by claim 4, the means for comparison in the tool for analysing and diagnosing physical media in an access network according to the current invention, may be adapted to perform a non-parametric comparison between the physical binder specific statistical distribution and the network-wide statistical distribution selected out of:
- a Wilcoxon Rank Sum test or Mann-Whitney U test;
- a Kolmogorov-Smirnov test;
- a Kuiper's test; or
- a Cramér-von-Mises test.

Especially when the statistical distribution deviates from the normal distribution, the Wilcoxon Rank Sum test or Mann-Whitney U test is known to be a more robust alternative for the parametric Student's T test. Alternatively, all comparison tests based on distance estimation between the binder-specific distribution and network-wide distribution functions may be considered as well to implement embodiments of the present invention. Examples thereof are the Kolmogorov-Smirnov test, the Kuiper's test or the Cramér-von-Mises test, but the scope of the present invention is obviously not limited to any particular choice of parametric or non-parametric test used for comparison of the statistical distributions.

According to a further optional aspect defined by claim 5, the tool for analysing and diagnosing physical media in an access network according to the present invention, may further comprise:
- means for deriving a root cause of a binder specific fault.

Indeed, by combining the comparison between binder-specific statistical distribution and network-wide statistical distribution for several parameters, it is possible to derive the root cause of a binder-specific problem. A priori knowledge of physical phenomena impacting the lines, like for instance corrosion or water ingress, will enable to combine the comparison of statistical distributions of several parameters according to certain rules, resulting in an identification of the root cause.

In a first embodiment, defined by claim 6, the means for deriving a root cause are adapted to detect a binder specific crosstalk fault if deviation between the physical binder specific statistical distribution and the network-wide statistical distribution for stationary noise exceeds a predefined first threshold whereas deviation between the physical binder specific statistical distribution and the network-wide statistical distribution for other parameters does not exceed one or more additional predefined thresholds.

Indeed, if a binder shows an abnormally high distribution of stationary noise whereas all other parameters show a normal distribution similar to the reference one, the problem affecting the binder is most probably an alien crosstalker disturbing the binder under consideration.

In a second embodiment, defined by claim 7, the means for deriving a root cause are adapted to detect a binder-specific water ingress fault if deviation between the physical binder specific statistical distribution and the network-wide statistical distribution for stationary noise exceeds a predefined first threshold, and deviation between the physical binder specific statistical distribution and the network-wide statistical distribution for MTBE exceeds a predefined second threshold, whereas deviation between the physical binder specific statistical distribution and the network-wide statistical distribution for other parameters does not exceed one or more additional predefined thresholds.

Thus, if a binder shows an abnormally high distribution in stationary noise together with an abnormally low MTBE distribution, whereas all other parameters follow a normal statistical distribution close to the reference one, the problem affecting the binder is most probably water ingress. Water ingress in the cable shall decrease the line balance of all lines in the cable, and consequently increase the stationary noise and impulse noise for the lines in the binder. The latter increase in impulse noise shall lower the mean time between errors or MTBE.

According to yet another optional aspect defined by claim 8, the tool for analysing and diagnosing physical media in an access network according the present invention may further comprise means for detecting a binder based on one or more of:
- a priori information received from an operator of said access network;
- binder partition information received from an access multiplexer; and
- automated binder partition detection based on tracking evolution of stationary noise in each line when physical conditions are changing.

Indeed, knowledge on which lines constitute a physical binder may be obtained from the operator if such a-priori knowledge is available there. In particular for remote unit deployment, the local, binder-specific distribution may be based on the Central Office repartition as there is usually a single first binder feeding all lines connected to a remote unit. Alternatively, the partition in binders may be detected automatically, for instance by tracking the evolution of stationary noise in each line when physical conditions are changing, as for instance described in European Patent Application No. EP 10305465.6 filed by the same Applicant on 30 April 2010. This way, by monitoring and identifying lines that respond coherently to external stimuli changing the physical conditions, operators are able to identify clusters of strongly coupled lines that form part of the same binder or virtual binder.

In addition to a tool for analysing and diagnosing physical media as defined by claim 1, the current invention also relates to a corresponding method for analysing and diagnosing physical media in an access network as defined by claim 9, the method comprising:
- determining a physical binder specific statistical distribution of one or more access line performance parameters;
- determining a network-wide statistical distribution of the one or more access line performance parameters;
- comparing the physical binder specific statistical distribution with the network-wide statistical distribution; and
- detecting and reporting as a result thereof binder-specific faults.

### Brief Description of the Drawings

Fig. 1 illustrates a prior art method for analysing and diagnosing lines and detecting binder-level problems;
Fig. 2 shows a binder specific statistical distribution and a network-wide statistical distribution of the MTBE parameter as determined by an embodiment of the tool according to the present invention; and
Fig. 3 illustrates comparison of the binder specific and network-wide MTBE cumulative distribution of Fig. 2 in an embodiment of the tool according to the present invention.

### Detailed Description of Embodiment(s)

The main benefit of the present invention resides in the fact that diagnosis is extended to a physical binder, whereas at present line diagnosis is used. As a result, access operators will be able to detect abnormal binders with specific binder faults.

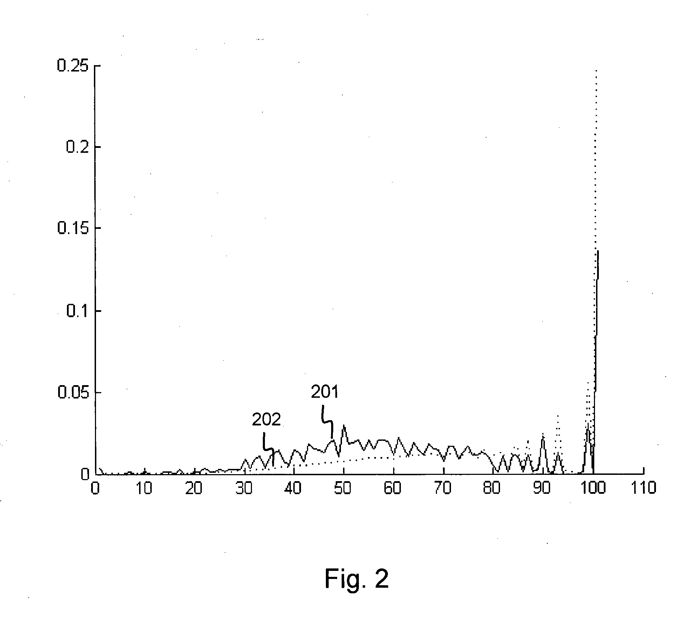

Fig. 2 shows the reference MTBE normalized statistical distribution 202 and the local MTBE normalized statistical distribution 201 for a binder between a DSLAM and a given remote unit. In order to detect an abnormality, the local MTBE normalized distribution 201 is compared to the reference MTBE normalized distribution 202 observed in the entire DSL network. Thereto, the Kolmogorov-Smirnov test which is a non-parametric statistical test, is used.

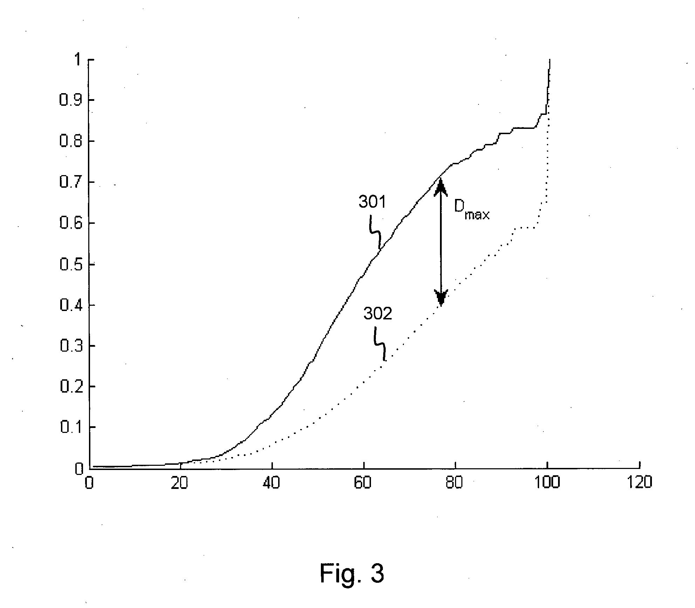

The Kolmogorov-Smirnov test quantifies the distance D between the reference cumulative MTBE distribution 302 and the local cumulative MTBE distribution 301. This is illustrated by Fig. 3. If the maximum distance Dₘₐₓ between these two cumulative distributions exceeds a certain threshold, the binder is identified as abnormal, suffering from a binder-specific fault. The threshold depends on the number of samples in the local distribution 201. These thresholds may be available in reference tables, or can be approximated using a formula when the number of samples is sufficiently high. When the maximum distance Dₘₐₓ stays below the threshold, the binder is considered to be normal.

Once the conformities of the binder specific distribution to the reference network-wide distribution is known for the different parameter(s), it is possible to derive the root cause of the binder problem by combining them according to some rules coming from a-priori knowledge of the physical phenomena impacting for instance DSL lines.

If for instance a binder shows an abnormally high distribution of stationary noise, all other parameters being normal, the problem is most probably due to an alien crosstalker disturbing the binder.

If on the other hand a binder shows an abnormally high distribution of stationary noise, together with an abnormally low MTBE distribution, i.e. a higher impulse noise level, all other parameters being normal, the problem is most probably due to a water ingress. This is so because the impact of water in the cable is a decrease of the line balance, and therefore an increase of stationary noise and impulse noise.

Although the invention is illustrated for DSL networks here above, its applicability can be extended to other technologies. In other wireline data transmission systems used in the access network and relying on binders, it is possible to apply the same concept of binder diagnosis based on comparison of binder specific (local) and network-wide (reference) statistical distributions of line performance parameters such as the MTBE, MTBR, stationary noise level, etc. If a binder fault affects a given binder, all the lines contained in this binder are most probably affected in a similar way. Then, the parametric or non-parametric comparison tests can be applied to detect the impaired binder and even identify the root cause of the binder fault using specific criteria.

It is noticed that the goal of the invention is to provide binder level diagnosis in access networks. Therefore, the local statistical distribution has to be related to a physical binder and the partition of lines into binders must be known to the tool according to the invention. This partition of lines in different binders can be a-priori knowledge of the operator, or this partition can be automatically detected by tool according to the invention. Especially for remote unit deployment, the local distribution can be based on the DSLAM repartition as there is usually a single first binder feeding all the lines connected to a remote unit.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. It is to be understood that the terms so used are interchangeable under appropriate circumstances and embodiments of the invention are capable of operating according to the present invention in other sequences, or in orientations different from the one(s) described or illustrated above.

## Claims

1. A tool for analysing and diagnosing physical media in an access network, **CHARACTERIZED IN THAT** said tool comprises:
- means for determining a physical binder specific statistical distribution (201; 301) of one or more access line performance parameters;
- means for determining a network-wide statistical distribution (202; 302) of said one or more access line performance parameters;
- means for comparison of said physical binder specific statistical distribution (201; 301) with said network-wide statistical distribution (202; 302); and
- means for detecting and reporting from said comparison binder-specific faults.

2. A tool for analysing and diagnosing physical media in an access network according to claim 1, wherein said access line performance parameters comprise one or more of:
- a stationary noise level measured for an access line;
- a mean time between errors or MTBE measured for an access line; and
- a mean time between resynchronizations or MTBR measured for an access line.

3. A tool for analysing and diagnosing physical media in an access network according to claim 1, wherein said means for comparison are adapted to perform a parametric comparison wherein a mean value and variance value of said physical binder specific statistical distribution (201; 301) are compared with a mean value and variance value of said network-wide statistical distribution (202; 302).

4. A tool for analysing and diagnosing physical media in an access network according to claim 1, wherein said means for comparison are adapted to perform a non-parametric comparison between said physical binder specific statistical distribution (201; 301) and said network-wide statistical distribution (202; 302) selected out of:
- a Wilcoxon Rank Sum test or Mann-Whitney U test;
- a Kolmogorov-Smirnov test;
- a Kuiper's test; or
- a Cramér-von-Mises test.

5. A tool for analysing and diagnosing physical media in an access network according to claim 1, further comprising:
- means for deriving a root cause of a binder specific fault.

6. A tool for analysing and diagnosing physical media in an access network according to claim 5, wherein said means for deriving a root cause are adapted to detect a binder specific crosstalk fault if deviation between said physical binder specific statistical distribution and said network-wide statistical distribution for stationary noise exceeds a predefined first threshold whereas deviation between said physical binder specific statistical distribution and said network-wide statistical distribution for other parameters does not exceed one or more additional predefined thresholds.

7. A tool for analysing and diagnosing physical media in an access network according to claim 5, wherein said means for deriving a root cause are adapted to detect a binder-specific water ingress fault if deviation between said physical binder specific statistical distribution and said network-wide statistical distribution for stationary noise exceeds a predefined first threshold, and deviation between said physical binder specific statistical distribution (201; 301) and said network-wide statistical distribution (202; 302) for MTBE exceeds a predefined second threshold, whereas deviation between said physical binder specific statistical distribution and said network-wide statistical distribution for other parameters does not exceed one or more additional predefined thresholds.

8. A tool for analysing and diagnosing physical media in an access network according to claim 1, further comprising means for detecting a binder based on one or more of:
- a priori information received from an operator of said access network;
- binder partition information received from an access multiplexer; and
- automated binder partition detection based on tracking evolution of stationary noise in each line when physical conditions are changing.

9. A method for analysing and diagnosing physical media in an access network,
**CHARACTERIZED IN THAT** said method comprises:
- determining a physical binder specific statistical distribution (201; 301) of one or more access line performance parameters;
- determining a network-wide statistical distribution (202; 302) of said one or more access line performance parameters;
- comparing said physical binder specific statistical distribution (201; 301) with said network-wide statistical distribution (202; 302); and
- detecting and reporting as a result thereof binder-specific faults.

## Patentansprüche

1. Werkzeug zur Analyse und Diagnose physischer Medien in einem Zugangsnetzwerk,
**DADURCH GEKENNZEICHNET, DASS** das besagte Werkzeug umfasst:
- Mittel zum Bestimmen einer physischen binderspezifischen statistischen Verteilung (201; 301) eines oder mehrerer Zugangsleitungs-Leistungsparameter;
- Mittel zum Bestimmen einer netzwerkweiten statistischen Verteilung (202; 302) des besagten einen oder der besagten mehreren Zugangsleitungs-Leistungsparameter;
- Mittel zum Vergleichen der besagten physischen binderspezifischen statistischen Verteilung (201; 301) mit der besagten netzwerkweiten statistischen Verteilung (202; 302); und
- Mittel zum Erfassen und Melden der aus dem Vergleich hervorgehenden binderspezifischen Fehler.

2. Werkzeug zur Analyse und Diagnose physischer Medien in einem Zugangsnetzwerk nach Anspruch 1, wobei die besagten Zugangsleitungs-Leistungsparameter einen oder mehrere der folgenden Parameter umfassen:
- Einen für eine Zugangsleitung gemessenen stationären Rauschpegel;
- eine mittlere Zeitspanne zwischen für eine Zugangsleitung gemessenen Fehlern (MTBE); und
- eine mittlere Zeitspanne zwischen für eine Zugangsleitung gemessenen Resynchronisationen (MTBR).

3. Werkzeug zur Analyse und Diagnose physischer Medien in einem Zugangsnetzwerk nach Anspruch 1, wobei die besagten Mittel zum Vergleichen für das Durchführen eines parametrischen Vergleichs ausgelegt sind, wobei ein Mittelwert und ein Varianzwert der besagten physischen binderspezifischen statistischen Verteilung (201; 301) mit einem Mittelwert und einem Varianzwert der besagten netzwerkweiten statistischen Verteilung (202; 302) verglichen werden.

4. Werkzeug zur Analyse und Diagnose physischer Medien in einem Zugangsnetzwerk nach Anspruch 1, wobei die besagten Mittel zum Vergleichen für das Durchführen eines nicht parametrischen Vergleichs zwischen der besagten physischen binderspezifischen statistischen Verteilung (201; 301) und der besagten netzwerkweiten statistischen Verteilung (202; 302) ausgelegt sind, ausgewählt unter
- einem Wilcoxon-Rangsummentest oder Mann-Whitney-U-Test;
- einem Kolmogorov-Smirnov-Test;
- einem Kuiper's-Test; oder
- einem Cramér-von-Mises-Test.

5. Werkzeug zur Analyse und Diagnose physischer Medien in einem Zugangsnetzwerk nach Anspruch 1, weiterhin umfassend:
- Mittel zum Ableiten einer Grundursache von einem binderspezifischen Fehler.

6. Werkzeug zur Analyse und Diagnose physischer Medien in einem Zugangsnetzwerk nach Anspruch 5, wobei die besagten Mittel zum Ableiten einer Grundursache dazu ausgelegt sind, einen binderspezifischen Übersprechfehler zu erfassen, wenn eine Abweichung zwischen der besagten physischen binderspezifischen statistischen Verteilung und der besagten netzwerkweiten statistischen Verteilung für stationäres Rauschen einen vordefinierten ersten Grenzwert überschreitet, während die Abweichung zwischen der besagten physischen binderspezifischen statistischen Verteilung und der besagten netzwerkweiten statistischen Verteilung für andere Parameter einen oder mehrere zusätzliche vordefinierte Grenzwerte nicht überschreitet.

7. Werkzeug zur Analyse und Diagnose physischer Medien in einem Zugangsnetzwerk nach Anspruch 5, wobei die besagten Mittel zum Ableiten einer Grundursache dazu ausgelegt sind, einen binderspezifischen Wassereintrittsfehler zu erfassen, wenn eine Abweichung zwischen der besagten physischen binderspezifischen statistischen Verteilung und der besagten netzwerkweiten statistischen Verteilung für stationäres Rauschen einen vordefinierten ersten Grenzwert überschreitet und die Abweichung zwischen der besagten physischen binderspezifischen statistischen Verteilung (201; 301) und der besagten netzwerkweiten statistischen Verteilung (202; 302) für MTBE einen vordefinierten zweiten Grenzwert überschreitet, während die Abweichung zwischen der besagten physischen binderspezifischen statistischen Verteilung und der besagten netzwerkweiten statistischen Verteilung für andere Parameter einen oder mehrere zusätzliche vordefinierte Grenzwerte nicht überschreitet.

8. Werkzeug zur Analyse und Diagnose physischer Medien in einem Zugangsnetzwerk nach Anspruch 1, weiterhin umfassend Mittel zum Erfassen eines Binders basierend auf entweder
- von einem Betreiber des besagten Zugangsnetzwerks empfangenen A-priori-Informationen;
- von einem Zugangsmultiplexer empfangenen Binderpartitions-Informationen; oder
- der automatisierten Erfassung einer Binderpartition basierend auf der Verfolgung der Entwicklung des in jeder Leitung vorhandenen stationären Rauschens, wenn sich die physischen Zustände ändern,
oder mehreren davon.

9. Verfahren zur Analyse und Diagnose physischer Medien in einem Zugangsnetzwerk,
**DADURCH GEKENNZEICHNET, DASS** das besagte Verfahren umfasst:
- Bestimmen einer physischen binderspezifischen statistischen Verteilung (201; 301) eines oder mehrerer Zugangsleitungs-Leistungsparameter;
- Bestimmen einer netzwerkweiten statistischen Verteilung (202; 302) des besagten einen oder der besagten mehreren Zugangsleitungs-Leistungsparameter;
- Vergleichen der besagten physischen binderspezifischen statistischen Verteilung (201; 301) mit der besagten netzwerkweiten statistischen Verteilung (202; 302); und
- Erfassen und Melden der daraus hervorgehenden binderspezifischen Fehler.

## Revendications

1. Outil pour analyser et diagnostiquer des supports physiques dans un réseau d'accès, **CARACTÉRISÉ EN CE QUE** l'outil comprend :
- des moyens pour déterminer une distribution statistique spécifique d'objet lieur physique (201 ; 301) d'un ou plusieurs paramètres de performance de la ligne d'accès ;
- des moyens pour déterminer une distribution statistique étendue au réseau (202 ; 302) desdits un ou plusieurs paramètres de performance de la ligne d'accès ;
- des moyens pour comparer ladite distribution statistique spécifique d'objet lieur physique (201 ; 301) avec ladite distribution statistique étendue au réseau (202 ; 302) ; et
- des moyens de détection et de notification des défauts spécifiques à l'objet lieur issus de ladite comparaison.

2. Outil pour analyser et diagnostiquer des supports physiques dans un réseau d'accès selon la revendication 1, avec lequel lesdits paramètres de performance de ligne d'accès comprennent un ou plusieurs des suivants :
- un niveau de bruit stationnaire mesuré pour une ligne d'accès ;
- un temps moyen entre les erreurs, ou MTBE, mesuré pour une ligne d'accès ; et
- un temps moyen entre les resynchronisations, ou MTBR, mesuré pour une ligne d'accès.

3. Outil pour analyser et diagnostiquer des supports physiques dans un réseau d'accès selon la revendication 1, avec lequel lesdits moyens pour comparer sont adaptés pour effectuer une comparaison paramétrique, avec lequel une valeur moyenne et une valeur de variance de ladite distribution statistique spécifique d'objet lieur physique (201 ; 301) sont comparées avec une valeur moyenne et une valeur de variante de ladite distribution statistique étendue au réseau (202 ; 302).

4. Outil pour analyser et diagnostiquer des supports physiques dans un réseau d'accès selon la revendication 1, avec lequel lesdits moyens pour comparer sont adaptés pour effectuer une comparaison non paramétrique entre ladite distribution statistique spécifique d'objet lieur physique (201 ; 301) et ladite distribution statistique étendue au réseau (202 ; 302) choisie parmi les suivantes :
- un test de la somme des rangs de Wilcoxon ou un test U de Mann-Whitney ;
- un test de Kolmogorov-Smirnov ;
- un test de Kuiper ; ou
- un test de Cramér-von-Mises.

5. Outil pour analyser et diagnostiquer des supports physiques dans un réseau d'accès selon la revendication 1, comprenant en outre :
- des moyens pour dériver une cause fondamentale d'un défaut spécifique à l'objet lieur.

6. Outil pour analyser et diagnostiquer des supports physiques dans un réseau d'accès selon la revendication 5, avec lequel lesdits moyens pour dériver une cause fondamentale sont adaptés pour détecter un défaut de diaphonie spécifique à l'objet lieur si l'écart entre ladite distribution statistique spécifique d'objet lieur physique et ladite distribution statistique étendue au réseau pour le bruit stationnaire dépasse un premier seuil prédéfini, alors que l'écart entre ladite distribution statistique spécifique d'objet lieur physique et ladite distribution statistique étendue au réseau pour d'autres paramètres ne dépasse pas un ou plusieurs seuils prédéfinis supplémentaires.

7. Outil pour analyser et diagnostiquer des supports physiques dans un réseau d'accès selon la revendication 5, avec lequel lesdits moyens pour dériver une cause fondamentale sont adaptés pour détecter un défaut de pénétration d'eau spécifique à l'objet lieur si l'écart entre ladite distribution statistique spécifique d'objet lieur physique et ladite distribution statistique étendue au réseau pour le bruit stationnaire dépasse un premier seuil prédéfini, et l'écart entre ladite distribution statistique spécifique d'objet lieur physique (201 ; 301) et ladite distribution statistique étendue au réseau (202 ; 302) pour le MTBE dépasse un deuxième seuil prédéfini, alors que l'écart entre ladite distribution statistique spécifique d'objet lieur physique et ladite distribution statistique étendue au réseau pour d'autres paramètres ne dépasse pas un ou plusieurs seuils prédéfinis supplémentaires.

8. Outil pour analyser et diagnostiquer des supports physiques dans un réseau d'accès selon la revendication 1, comprenant en outre des moyens pour détecter un objet lieur en se basant sur un ou plusieurs des éléments suivants :
- une information a priori reçue de la part d'un opérateur dudit réseau d'accès ;
- une information de partition d'objet lieur reçue de la part d'un multiplexeur d'accès ; et
- une détection de partition d'objet lieur automatisée basée sur le suivi de l'évolution du bruit stationnaire dans chaque ligne lorsque les conditions physiques changent.

9. Procédé pour analyser et diagnostiquer des supports physiques dans un réseau d'accès,
**CARACTÉRISÉ EN CE QUE** ledit procédé comprend :
- détermination d'une distribution statistique spécifique d'objet lieur physique (201 ; 301) d'un ou plusieurs paramètres de performance de la ligne d'accès ;
- détermination d'une distribution statistique étendue au réseau (202 ; 302) desdits un ou plusieurs paramètres de performance de la ligne d'accès ;
- comparaison de ladite distribution statistique spécifique d'objet lieur physique (201 ; 301) avec ladite distribution statistique étendue au réseau (202 ; 302) ; et
- détection et notification en résultat de celle-ci des défauts spécifiques à l'objet lieur.
